Europäisches Patentamt

European Patent Office

Office européen des brevets

(19)

(11) **EP 1 109 350 B1**

(12) **FASCICULE DE BREVET EUROPEEN**

(45) Date de publication et mention
de la délivrance du brevet:
**05.10.2005 Bulletin 2005/40**

(51) Int Cl.⁷: **H04L 9/06**

(21) Numéro de dépôt: **00403523.4**

(22) Date de dépôt: **14.12.2000**

(54) **Dispositif mettant en oeuvre un algoritme de chiffrage par bloc à répétition de rondes**

Vorrichtung zur Ausführung eines Blockverschlüsselungsalgorithmus mit Wiederholungsrunden

Apparatus for implementing a block encryption algorithm using round repetition

(84) Etats contractants désignés:
**DE ES GB IT**

(30) Priorité: **15.12.1999 FR 9915845**

(43) Date de publication de la demande:
**20.06.2001 Bulletin 2001/25**

(73) Titulaire: **Sagem SA**
**75016 Paris (FR)**

(72) Inventeurs:
• **Chabanne, Hervé**
**78200 Mantes-la-Jolie (FR)**

• **Tissot, Nicolas**
**95240 Cormeilles-en-Parisis (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 981 223          NL-C- 1 011 800**

**Description**

La présente invention concerne les dispositifs mettant en oeuvre un algorithme de chiffrage fournissant, à partir d'une donnée d'entrée en clair de longueur déterminée, un cryptogramme ou donnée de sortie qui dépend de la donnée d'entrée et d'une clé mémorisée inaccessible en lecture depuis l'extérieur du dispositif.

L'invention est applicable aux dispositifs du genre mettant en oeuvre un chiffrage par bloc à répétition de rondes comportant chacune :

- des transformations linéaires et
- des transformations non linéaires correspondant à des tables de substitution et utilisant une clé maître à partir de laquelle sont générées une ou des sous clés qui sont injectées dans les rondes grâce à des opérations linéaires.

Elle trouve un intérêt particulier dans les dispositifs de chiffrage mettant en oeuvre l'algorithme DES (data encryption standard) dont une description pourra être trouvée dans "Cryptographie Appliquée" par Bruce Schneier, traduction française, 2ème Edition, International Thomson Publishing, pages 281 et suivantes. Cet algorithme est à l'heure actuelle utilisé dans les cartes à puce pour fournir, à partir d'une donnée d'entrée en clair de 8 octets et d'une clé maître de 56 éléments binaires ou bits utiles, un cryptogramme ou donnée de sortie.

Un dispositif mettant en oeuvre l'algorithme de chiffrage DES peut être regardé comme ayant 16 étages en cascade, chaque étage recevant une entrée de 2 x 32 bits. L'étage d'entrée est précédé d'un permutateur d'entrée fournissant 32 bits constituant une partie gauche et 32 bits constituant une partie droite, les 32 bits constituant des opérandes. Le dernier étage est suivi d'un permutateur effectuant l'opération duale.

Chaque étage comporte :

- un élément d'expansion augmentant la taille de la partie droite, et
- un ensemble ou "ronde" ayant en cascade un opérateur OU EXCLUSIF ou XOR sur l'opérande droit expansé et une sous-clé de même longueur dérivée de la clé maître et des tables de substitution ou "S-boxes" affectées chacune à un groupe de bits et à lecture dans un ordre arbitraire et un opérateur XOR sur le contenu lu dans les tables et l'opérande gauche expansé pour donner naissance à une partie gauche de 32 bits constituant une des sorties de l'étage, l'autre sortie étant constituée par le résultat de la première opération XOR.

L'algorithme DES, tel qu'il est mis en oeuvre dans les cartes à puce, opère de la façon suivante. La donnée d'entrée est transformée en 16 étages successifs, à chacun desquels est affectée une sous-clé de 8 x 6 bits et on découpe chaque opérande, dans l'état où il est fourni à l'étage, en 8 tables de chacune 6 octets utiles.

Les algorithmes définis, et notamment l'algorithme DES sont attaquables par analyse différentielle de consommation de courant, du fait qu'ils sont en règle générale mis en oeuvre avec des circuits C-MOS qui ne consomment du courant que lors des changements d'état. Ce mode d'attaque de l'algorithme DES est décrit dans l'article de Chari et al. "Towards Sound Approaches to Counteract Power Analysis Attacks", Acte de la Conférence Crypto '99. Il repose sur des tests systématiques sur toutes les sous-clés possibles. On calcule des bits ayant participé au calcul à partir de chaque sous-clé choisie. Les mesures de consommation sont ensuite réparties en deux ensembles qui font apparaître un biais si la sous-clé est correcte. On remonte ainsi les étages ou itérations de l'algorithme. Dans le cas du DES mis en oeuvre sur les cartes à puce, à 16 étages et avec une clé de 64 bits (dont 56 bits utiles), donnant naissance à 16 sous-clés de 48 bits affectées chacune à une table, elles-mêmes scindées en 8 sous-clés élémentaires de 6 bits, un millier d'accès à la carte permet de déterminer la clé.

Le procédé pour rendre l'algorithme DES plus robuste qui est proposé dans l'article mentionné plus haut utilise la constatation que l'on peut interdire ou au moins gêner l'analyse différentielle de consommation, souvent appelée DPA, en manipulant les données de façon que les bits que l'attaquant calcule à partir de sa connaissance de l'algorithme et des entrées/sorties de la carte soit sans rapport avec les opérations réalisées dans la carte.

Pour cela, l'article propose d'appliquer un masque aléatoire aux sous-clés K intervenant à chaque étage i ou à certains des étages. Mais cette solution présente l'inconvénient de compliquer énormément les calculs, car le masque ne se conserve pas dans les étages successifs. NL-C-1 011 800 propose d'appliquer des masques aux opérandes d'entrée, mais les masques ne se conservent pas dans les étages successifs non plus.

Un but général de l'invention est d'augmenter la résistance à l'attaque, par analyse différentielle de consommation, des algorithmes du genre défini ci-dessus. Dans ce but elle propose un dispositif suivant la revendication 1.

L'idée de base est de faire en sorte que les bits que l'attaquant calcule à partir de sa connaissance de l'algorithme et des entrées/sorties de la carte n'aient aucun rapport avec la réalité des opérations réalisées par la carte. Cela revient en fait à "masquer" les opérations en appliquant, via un "OU EXCLUSIF", un masque aléatoire à chacun des opérandes (et non pas des sous-clés) afin que les bits intervenant dans les calculs n'aient, a priori, qu'une chance sur deux d'être les mêmes qu'auparavant.

La présente invention vise surtout à fournir un dispositif mettant en oeuvre un algorithme de chiffrage fournissant les mêmes résultats que les algorithmes ci-dessus DES (ou autres, tels que AES et Kasami), mais assurant une résistance très élevée à l'attaque par analyse différentielle de consommation, sans complication excessive des calculs.

Il est en conséquence proposé, suivant un autre aspect de l'invention, un dispositif de chiffrage mettant en oeuvre un algorithme donnant la même sortie que l'algorithme DES, suivant la revendication 2.

Les termes "gauche" et "droit" ne sont utilisés que par commodité et sans que cela ait un sens quant à une disposition des opérandes. Les opérations successives peuvent être faites par voie logicielle ou matérielle.

La constitution ci-dessus exploite le fait que les opérations OU, les opérations OU exclusif XOR, les expansions E et les permutations P ont un caractère linéaire, c'est-à-dire que, si on appelle M un octet d'un masque et A et B ceux de deux opérandes, on a :

$$A \oplus (B \oplus M) = (A \oplus B) \oplus M$$

$$E (A \oplus M) = E (A) \oplus E (M)$$

$$P (A \oplus M) = P (A) \oplus P (M)$$

Seul le passage dans les tables, dites "S BOX", n'est pas linéaire, ce qui oblige à constituer les tables de façon différente de celle utilisée pour mettre en oeuvre l'algorithme DES classique.

Si on désigne par S l'opération effectuée par les tables d'un étage et par A et B les opérandes, l'opération :

$$S(E[A]) = B$$

est à remplacer par :

$$S(E[A] \oplus M_1) = B \oplus M_2 = S(E[A]) \oplus M_2$$

mettant en oeuvre des opérations OU EXCLUSIF.

$M_1$ ou $M_2$ désignent des masques tirés aléatoirement.

On verra que la modification qui en résulte sur le schéma habituel du DES est simple : on masque L et R, après avoir réalisé la permutation initiale IP, avec respectivement $M_1$ et $M_1 \oplus P(M_2)$. Par ailleurs, avant chaque entrée dans une ronde, on réalise un OU EXCLUSIF entre R et $P(M_2)$.

Comme on le verra plus loin, les masques se conservent après passage dans les boîtes et cette propriété permet de répéter sans calcul supplémentaire la protection sur tous les ensembles successifs et donc d'obtenir une protection maximale sans complication additionnelle. On voit donc l'intérêt de l'application d'un masque aux opérandes, comparée à l'application d'un masque aux sous-clés.

L'invention n'est pas applicable seulement à l'algorithme DES, mais également à tout autre algorithme de chiffrage mettant en oeuvre surtout des opérations de nature linéaire et des opérations dans lesquelles il y a conservation du masque sur les étages successifs.

Les caractéristiques ci-dessus, ainsi que d'autres, apparaîtront mieux à la lecture de la description qui suit de la mise en oeuvre de l'invention dans un dispositif de chiffrage dérivé de dispositifs couramment utilisés dans les cartes à puce, ayant 2n = 16 étages ou itérations.

La description se réfère aux figures qui l'accompagnent dans lesquelles :

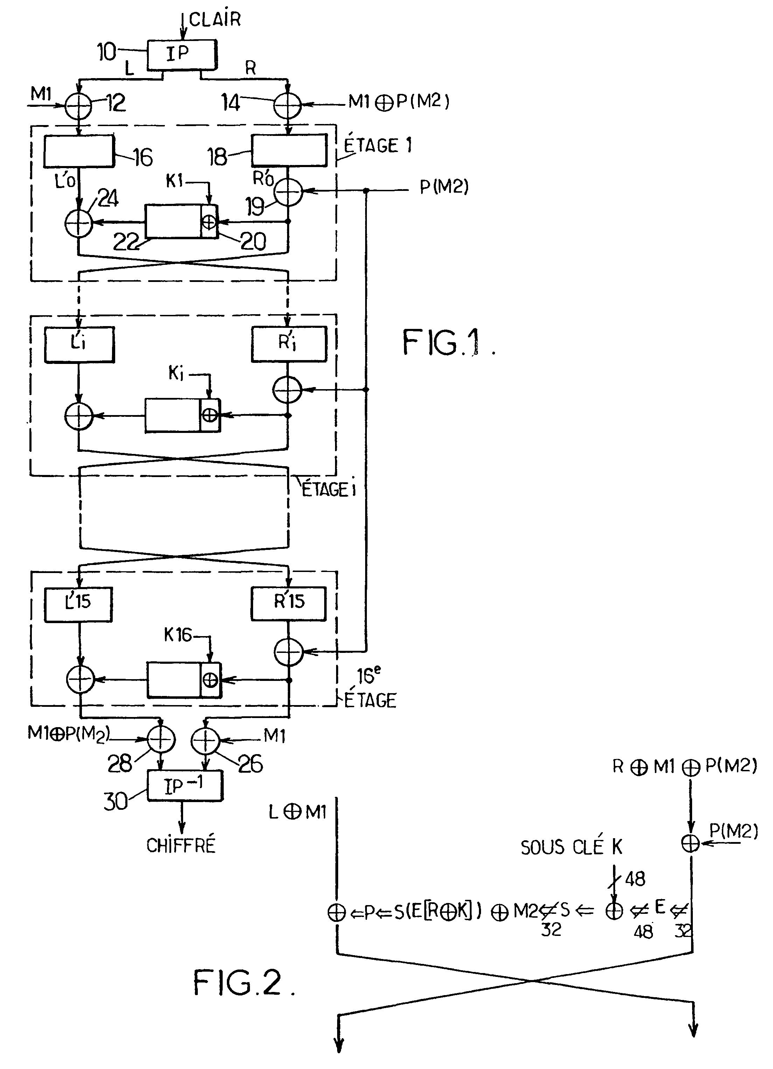

- la figure 1 est un schéma du dispositif,
- la figure 2 est un schéma d'un étage.

Le dispositif représenté comporte 16 étages de constitution identique. Les données d'entrée en clair, qu'on supposera par la suite être constituées, soit de 8 octets, soit 64 bits sont appliquées à un permutateur d'entrée 10, qui effectue une permutation IP. Ce permutateur fournit en sortie une partie gauche L de 32 bits et une partie droite R également de 32 bits. Avant d'entrer dans les étages successifs 1, ..., i ... 16, les parties L et R, qui constituent des opérandes, sont soumises à des opérations logiques XOR au niveau du bit, dans des portes 12 et 14 :

$$L \oplus M_1$$

$$R \oplus M_1 \oplus P(M_2)$$

$M_1$ et $M_2$ sont des masques de 32 bits qui seront utilisés dans chaque étage du dispositif, mais sont aléatoires, c'est-à-dire changent à chaque accès au dispositif, on obtient ainsi en 16 et 18 des opérandes $L'_o$ et $R'_o$ pour le premier étage.

Dans chaque étage, la partie droite qui résulte de l'opération XOR en 14 est soumise à expansion E portant sa longueur de 32 à 48 bits, comme indiqué en 18 pour l'étage. 1. La partie droite $R'_0$ est soumise en 19 à une opération XOR avec $P(M_2)$ qui compense l'opération faite en 14. La partie droite ainsi modifiée, comportant 48 bits, est combinée en 20 avec une sous-clé de 48 bits par une opération XOR. Chacune des sous-clés $K_1$,..., K16 est constituée à partir de la clé maître par décalage et sélection de 48 bits parmi les 56 bits de la clé maître. Cette opération XOR 20 constitue le premier élément d'une ronde ou "round", identique dans chaque étage et effectuée dans une table de substitution 22 par un algorithme de substitution mémorisé. La sortie de la ronde est combinée avec la moitié gauche $L'_0$ (pour l'étage 1) par une nouvelle opération XOR 24 et les sorties sont croisées de sorte que la moitié gauche devient la moitié droite et inversement.

A l'issue de la ronde du dernier étage, la partie droite est combinée au masque $M_1$ par une opération XOR 26 tandis que la partie gauche est combinée avec le résultat de l'opération $M_1 \oplus P(M_2)$ par une opération XOR 28. Enfin le résultat est soumis en 30 à une permutation $IP^{-1}$ inverse de la permutation initiale.

Une comparaison entre les résultats intermédiaires obtenus par l'algorithme DES classique et par l'algorithme modifié conformément à l'invention fait apparaître les différences.

Si on désigne par $L_i$ et $R_i$ les parties gauche et droite de la ième itération (ième étage) de l'algorithme DES standard et par $L'_i$ et $R'_i$ les parties gauche et droite du DES modifié conformément à l'invention, on a :

$$R_i' = R_i \oplus M_1 \oplus P(M_2)$$

$$L_i' = L_i \oplus M_1$$

L'opération XOR avec P(M2) avant expansion implique :

$$S(E[R_i' \oplus P(M_2) \oplus K) \oplus M_1])) = S(E[R_i \oplus K]) \oplus M_2$$

et comme $L_{i+1} = R_i$ et $R_i + 1 = P(S(E[R_i \oplus K])) \oplus L_i$ il vient :

$$L_{i+1}' = R_i' \oplus P(M_2) = R_i \oplus M_1$$

ce qui donne $L_{i+1}' = L_{i+1} \oplus M_1$, et

$$R_{i+1}' = P(S(E[R_i \oplus K] \oplus M_2) \oplus L_i, = P(S(E[R_i \oplus K])) \oplus P(M_2) \oplus L_i \oplus M_1$$

ce qui donne $R_{i+1}' = R_i + 1 \oplus M_1 \oplus P(M_2)$

Ces formules font apparaître que les masques M1 et M2 se conservent au passages dans les tables successives.

Les opérations XOR finales en 26 et 28 (démasquage de $L_{16}$ et $R_{16}$ juste avant la permutation finale) et conduisent au même résultat que le DES standard.

L'avantage de l'invention découle de l'incertitude qu'elle provoque en cours de calcul sur les bits et qui découle du masquage. Il y a une possibilité de ½ pour que chaque bit soit transformé en son complémentaire par l'opération de masquage. Comme les masques changent à chaque nouvel appel au DES, il est impossible de déterminer quels sont les bits masqués et quels sont ceux qui ne le sont pas. Par conséquent l'attaquant ne peut plus distinguer, même lorsqu'il a deviné et essayé la bonne sous-clé, les valeurs des bits. L'attaque par DPA n'est plus possible. Expérimentalement aucun biais n'est apparu sur 10.000 accès au DES. L'accroissement de complexité requis est raisonnable.

Dans la mise en oeuvre sur les carte à puce (16 étages et données de 64 bits), le recalcul dans les tables des rondes et le recalcul systématique n'exigent que 256 octets en mémoire vive. Le temps d'exécution du DES passe de 12 à 25 ms. Mais l'algorithme est englobé dans un processus nécessitant la récupération de la commande de chiffrement et des paramètres, de sorte que la perte de temps n'est que de l'ordre de 18 %. On passe de 72 à 85 ms et le code assembleur passe de 1000 à 1300 octets, ce qui est très tolérable au vu du résultat obtenu.

**Revendications**

**1.** Dispositif mettant en oeuvre un algorithme de chiffrage par bloc à répétition de rondes, chaque ronde comportant :

des transformations linéaires (12,14,16,18,19,24), et

des transformations non linéaires (22)

consistant à faire passer des données à travers des tables ou boîtes de substitution (22), utilisant une clé maître à partir de laquelle sont générées une ou des sous clés (ki) qui sont injectées dans les rondes par des opérations linéaires,
**caractérisé en ce qu'**il applique des masques ($M_1,M_2$) aux opérandes d'entrée (L,R) par des opérations linéaires et **en ce que** les tables de substitution (22) sont prévues pour qu'une modification linéaire de leur entrée provoque une modification linéaire de leur sortie.

**2.** Dispositif selon la revendication 1, dans lequel l'algorithme de chiffrage mis en oeuvre donne la même sortie que l'algorithme DES, et comportant :

- un permutateur initial P partageant l'entrée en une partie gauche L et une partie droite R chacune de 32 bits,
- un opérateur d'entrée XOR entre la partie gauche L et un masque aléatoire M1 de même longueur,
- un opérateur d'entrée XOR entre la partie droite R et le résultat de l'opération XOR effectuée sur M1 et sur la permutation P d'un masque aléatoire M2,
- 16 étages en cascade, chaque étage recevant une entrée de 2 x 32 bits de l'étage précédent et ayant :

o un élément d'expansion de la partie droite masquée, donnant naissance à une valeur expansée R'i
o une porte XOR de compensation, effectuant l'opération XOR sur $R'_i$ et la permutation $P(M_2)$,
o une ronde effectuant l'opération XOR entre la sortie de la porte de compensation XOR et la valeur L'i, et ayant comme tables de substitution des tables affectées chacune à un groupe de bits, à lecture dans un ordre arbitraire et un opérateur XOR sur le contenu lu dans les tables et la partie gauche pour donner naissance à une partie gauche de sortie de 32 bits, l'autre sortie étant constituée par la sortie de la porte de compensation, l'opération effectuée par les tables d'un étage sur une opérande d'entrée A et B étant de la forme :

$$S(E[A] \oplus M1) = B \oplus M2 = S(E[A]) \oplus M2$$

et les parties gauche et droite $L'_i$ et $R'_i$ du ième étage étant reliées aux parties gauche et droite Li et Ri de l'algorithme DES standard par les relations:

$$Ri' = Ri \oplus M1 \oplus P(M2)$$

$$Li' = Li \oplus M1$$

o des opérateurs XOR de démasquage effectuant, en aval du dernier étage, les mêmes opérations qu'en entrée,
o un permutateur effectuant l'opération $P^{-1}$ duale de la permutation P d'entrée.

**3.** Dispositif selon la revendication 1, **caractérisé en que** les opérations (S) effectuées dans les tables de substitution sont de la forme :

$$S(E[A] \oplus M1) = B \oplus M2 = S(E[A]) \oplus M2$$

où:

$\oplus$ désigne l'opération ou EXCLUSIF bit à bit
E désigne une expansion
M1 désigne un manque aléatoire appliqué sur une partie gauche d'entrée
M2 désigne un masque aléatoire
A et B désignant les opérandes d'entrée.

**Claims**

1. A device for implementing a block encryption algorithm using round repetition, wherein each round comprises:

   linear transformations (12, 14, 16, 18, 19, 24); and
   non-linear transformations (22);

   consisting in passing data through substitution tables or boxes (22) using a master key, from which one or more sub keys (Ki) are generated which are injected in the rounds by linear operations **characterised in that** it applies masks (M1,M2) to the input operands (L,R) through linear operations and **in that** the substitution tables (22) are provided so that a linear modification of their input causes a linear modification of their output.

2. A device according to claim 1, wherein the encryption algorithm implemented gives the same output as the algorithm DES and comprises:

   - an initial permutator P splitting the input in a left part L and a right part R, each having 32 bits,
   - an input operator XOR between the left part L and a random mask M1 of the same length,
   - an input operator XOR between the right part R and the result of the operation XOR effected on M1 and on the permutation P of a random mask M2,
   - 16 stages in cascade, each stage receiving an input of 2 x 32 bits from the preceding stage and having:

     o an expansion element of the masked right part giving rise to an expanded value R'i,
     o a compensation gate XOR carrying out the operation XOR on R'i and the permutation P(M2),
     o a round carrying out the operation XOR between the output of the compensation gate XOR and the value L'i and having, as substitution tables, tables which are each assigned to a group of bits for reading in an arbitrary order and an operator XOR on the content read in the tables and the left part in order to give rise to a left output part of 32 bits, the other output being constituted by the output of the compensation gate, the operation effected by the one-stage tables on an input operand A and B being of the form:

$$S(E[A] \oplus M1) = B \oplus M2 = S(E[A]) \oplus M2$$

     o and the left and right parts L'i and R'i of the ith stage being linked to the left and right parts Li and Ri of the algorithm DES standard by the relationships:

$$Ri' = Ri \oplus M1 \oplus P(M2)$$

$$Li' = Li \circledR M1$$

     o operators XOR for demasking, carrying out the same operations as at the input, downstream of the last stage,
     o a permutator carrying out the dual operation $P^{-1}$ of the input permutation P.

3. A device according to claim 1, **characterised in that** the operations (S) effected in the substitution tables are of the form:

$$S(E[A] \oplus M1) = B \oplus M2 = S(E[A]) \oplus M2$$

where:

$\oplus$ designates the operation XOR bit by bit
E designates an expansion
M1 designates a random mask applied to a left input part
M2 designates a random mask and
A and B designate the input operands.

**Patentansprüche**

1. Vorrichtung zur Ausführung eines Blockverschlüsselungsalgorithmus mit Wiederholungsrunden, wobei jede Runde
    lineare Transformationen (12, 14, 16, 18, 19, 24) und
    nicht lineare Transformationen (22)
aufweist, die darin bestehen, Daten durch Substitutionstabellen oder -boxen (22) laufen zu lassen, wobei ein Hauptschlüssel verwendet wird, von dem ausgehend ein oder mehrere Unterschlüssel ($K_i$) generiert werden, die in die Runden durch lineare Operationen eingebracht werden,
**dadurch gekennzeichnet, dass** sie durch lineare Operationen Masken (M1, M2) auf die Eingangsoperanden (L, R) anwendet, und dass die Substitutionstabellen (22) vorgesehen sind, um durch eine lineare Veränderung ihres Eingangs eine lineare Veränderung ihres Ausgangs zu bewirken.

2. Vorrichtung nach Anspruch 1,
bei der der ausgeführte Verschlüsselungsalgorithmus den gleichen Ausgang wie der DES-Algorithmus ergibt und folgendes umfasst:

- eine Eingangspermutation. P, durch die der Eingang in einen linken Teil L und einen rechten Teil R mit jeweils 32 Bit geteilt wird,
- einen Eingangsoperator XOR zwischen dem linken Teil L und einer Zufallsmaske M1 gleicher Länge,
- einen Eingangsoperator XOR zwischen dem rechten Teil R und dem Ergebnis der XOR-Operation, die an M1 und der Permutation P einer Zufallsmaske M2 erfolgt,
- 16 hintereinander angeordnete Stufen, wobei jede Stufe einen Eingang mit 2 x 32 Bit der vorangehenden Stufe erhält und folgendes aufweist:

    o ein Expansionselement des rechten verdeckten Teils, das einen expandierten Wert R'i erzeugt,
    o ein Kompensationsgatter XOR, das die XOR-Operation an R'i und der Permutation P(M2) ausführt,
    o eine Runde, die die XOR-Operation zwischen dem Ausgang des Kompensations-XOR-Gatters und dem Wert L'1 ausführt und Tabellen als Substitutionstabellen besitzt, die jeweils einer Bit-Gruppe zugeordnet sind und in willkürlicher Reihenfolge gelesen werden, sowie einen XOR-Operator über den in den Tabellen gelesenen Inhalt und den linken Teil zum Erzeugen eines linken Ausgangsteils mit 32 Bit, wobei der andere Ausgang von dem Ausgang des Kompensationsgatters gebildet ist, wobei die durch die Tabellen einer Stufe an einem Eingangsoperand A und B ausgeführte Operation die Form

$$S(E[A] \oplus M1) = B \oplus M2 = S(E[A] \oplus M2$$

hat und der linke und rechte Teil L'i und R'i der i-ten Stufe mit dem linken und rechten Teil U und Ri des Standard-DES-Algorithmus durch die Relationen

$$Ri' = Ri \oplus M1 \oplus P(M2)$$

$$L'i = Li \oplus M1$$

verbunden sind,

- o Demaskierungsgatter XOR, die nach der letzten Stufe die gleichen Operationen wie am Eingang ausführen,
- o eine Permutation, durch die die duale Operation $P^{-1}$ der Eingangspermutation P ausgeführt wird.

3. Vorrichtung nach Anspruch 1,
**dadurch gekennzeichnet, dass** die in den Substitutionstabellen ausgeführten Operationen (S) die Form

$$S(E[A] \oplus M1) = B \oplus M2 = S(E[A]) \oplus M2$$

haben, wobei

$\oplus$ die Exklusiv-Oder-Opration Bit für Bit bezeichnet,
E eine Expansion bezeichnet,
M1 eine auf einen linken Eingangsteil angewandte Zufallsmaske bezeichnet,
M2 eine Zufallsmaske bezeichnet,
A und B die Eingangsoperanden bezeichnen.

EP 1 109 350 B1

FIG.1.

FIG.2.